# EUROPÄISCHE PATENTANMELDUNG

(11) **EP 3 091 496 A1**
(43) Veröffentlichungstag der Anmeldung: **09.11.2016**
(21) Anmeldenummer: 15166584.1
(22) Anmeldetag: 06.05.2015
(51) Int. Cl.: G06Q 30/06

(54) **SYSTEM UND VERFAHREN ZUR FREMDAUFNAHME VON FOTOS UND VIDEOS**

(71) Anmelder: Werner, Ralph, 70329 Stuttgart (DE)
(72) Erfinder: Werner, Ralph, 70329 Stuttgart (DE)
(74) Vertreter: Kohler Schmid Möbus Patentanwälte

(57) **Zusammenfassung**

Ein System (1) zum Fremdaufnehmen von FotosNideos umfasst mehrere User-Endgeräte (2, 3), von denen mindestens eines ein mobiles Endgerät (3) mit einer Kamera (4) ist, und einen Foto/Video-Fremdaufnahmedienst (5), in dem die Endgeräte (2, 3) registriert sind, wobei mindestens ein registriertes Auftraggeber-Endgerät ein Kaufangebot-Programmmodul (10) zum Senden eines Kaufangebots für die Aufnahme eines Fotos/Videos von einem Objekt (7) aufweist, wobei das System (1) ausgebildet ist, das Kaufangebot via den Fremdaufnahmedienst (5) an diejenigen registrierten mobilen Endgeräte (3) zu übermitteln, die sich gerade innerhalb einer vorgegebenen Entfernung (A) zum Ort des Objekts (7) befinden, und wobei mindestens ein registriertes mobiles Auftragnehmer-Endgerät (3) ein Annahme-Programmmodul (11) zum Senden einer Annahme eines empfangenen Kaufangebots und ein Foto/Video-Programmmodul (12) zum Senden eines mit der Kamera (4) aufgenommenen FotosNideos des Objekts (7) aufweist, wobei das System (1) ausgebildet ist, die Annahme des Kaufangebots und das FotoNideo des Objekts (7) an das Auftraggeber-Endgerät (2) zu übermitteln.

## Beschreibung

Die Erfindung betrifft ein System und ein Verfahren zur Fremdaufnahme von Fotos/Videos, sowie ein zugehöriges mobiles User-Endgerät und ein Computerprogrammprodukt.

Um ein Foto oder Video von einem Objekt, welches sich an einem anderen Ort befindet, zu erhalten, müssen oft Dritte (Freunde, Bekannte oder vor Ort ansässige Firmen) mit der Aufnahme des Fotos/Videos beauftragt werden, was mit einem hohen Zeit- und Kostenaufwand verbunden ist. Wenn beispielsweise ein Handwerker ein mit Bemaßung versehenes Foto einer entfernt liegenden Baustelle benötigt, z.B. um die Einbausituation zu überprüfen, muss er entweder selbst dort hinfahren oder bei einem Handwerker vor Ort wegen eines solchen Fotos anfragen. Wenn ein Journalist ein aktuelles Foto von einem bestimmten Ort benötigt, muss er bisher einen Kollegen vor Ort wegen eines solchen Fotos fragen. Auch investigative Berufsgruppen, wie z.B. Versicherer, Presse, Ermittler, aber auch Behörden, Firmen und Privatpersonen benötigen oft von entfernten Objekten Fotos oder Videos, die nur mit hohem Aufwand beschafft werden können.

Es ist die Aufgabe der vorliegenden Erfindung, hier Abhilfe zu schaffen und ein System und ein Verfahren anzugeben, mit dem leicht und einfach Fotos/Videos von Objekten an entfernten Orten aufgenommen werden können.

Diese Aufgabe wird erfindungsgemäß durch ein System zur Fremdaufnahme von Fotos/Videos gelöst, umfassend mehrere User-Endgeräte, von denen mindestens eines ein mobiles Endgerät mit einer Kamera ist, und einen Foto/Video-Fremdaufnahmedienst (Service), bei dem die Endgeräte registriert sind, wobei mindestens ein registriertes Auftraggeber-Endgerät ein Kaufangebot-Programmmodul zum Senden eines Kaufangebots für die Aufnahme eines Fotos/Videos von einem Objekt aufweist und das System ausgebildet ist, das Kaufangebot *via* den Fremdaufnahmedienst an diejenigen registrierten mobilen Endgeräte zu übermitteln, die sich gerade innerhalb einer vorgegebenen Entfernung zum Ort des Objekts befinden, und
wobei mindestens ein registriertes mobiles Auftragnehmer-Endgerät ein Annahme-Programmmodul zum Senden einer Annahme eines empfangenen Kaufangebots und ein Foto/Video-Programmmodul zum Senden eines mit der Kamera aufgenommenen Fotos/Videos des Objekts aufweist und das System ausgebildet ist, die Annahme des Kaufangebots und das Foto/Video des Objekts an das Auftraggeber-Endgerät zu übermitteln.

Diese Aufgabe wird erfindungsgemäß auch durch ein Verfahren zum Fremdaufnehmen von Fotos/Videos mit folgenden Verfahrensschritten gelöst:
- Registrieren von User-Endgeräten bei einem Foto/Video-Fremdaufnahmedienst (Service);
- Übermitteln eines Kaufangebots durch ein registriertes Auftraggeber-Endgerät für die Aufnahme eines Fotos/Videos von einem Objekt *via* den Fremdaufnahmedienst an diejenigen registrierten mobilen Endgeräte, die sich gerade innerhalb einer vorgegebenen Entfernung zum Ort des Objekts befinden,

- Übermitteln der Angebotsannahme durch ein registriertes mobiles Auftragnehmer-Endgerät an das Auftraggeber-Endgerät;
- Aufnehmen eines Fotos/Videos von dem Objekt mit einer Kamera des mobilen Auftragnehmer-Endgeräts; und
- Übermitteln des Fotos/Videos von dem Auftragnehmer-Endgerät an das Auftraggeber-Endgerät.

Erfindungsgemäß erhält ein registrierter User von zuhause oder vom Büro als Auftraggeber somit weltweiten Zugriff auf Echtzeit-Fotos und Echtzeit-Videos (z.B. Livestreams für den Moment oder über längeren Zeitraum) von denjenigen registrierten Usern, die sich gerade vor Ort befinden. Aufgrund der vielen weltweit verteilten registrierten User stellt die Erfindung somit eine Webcam an nahezu jedem Fleck der Erde bereit. Bei den mobilen Endgeräten handelt es sich beispielsweise um Smartphones, Tabletcomputer, Fahrzeugkameras etc., aber auch um neue autonome mobile Maschinen (Fahrzeuge, Drohnen etc.) mit Kamera. Bei dem Objekt kann es sich insbesondere um ein Motiv, ein Gebäude, einen Gegenstand, aber auch Personen etc. handeln. Die Erfindung ist besonders geeignet für investigative Berufsgruppen, wie z.B. Versicherer, Presse, Ermittler, aber auch für Behörden, Firmen und Privatpersonen. Die Erfindung reduziert auf Auftraggeberseite Kosten und Aufwand für ein Foto/Video und ermöglicht Gewinne auf der Auftragnehmerseite.

Nach Übermitteln des Fotos/Videos an das Auftraggeber-Endgerät wird ein vereinbarter Kaufpreis vom Auftraggeber an den Auftragnehmer, insbesondere *via* den Fremdaufnahmedienst, gezahlt. Bevorzugt weist das Auftraggeber-Endgerät ein Bezahl-Programmmodul zum Bezahlen des Kaufpreises an den Auftragnehmer auf, wobei das System ausgebildet ist, den vereinbarten Kaufpreis vom Auftraggeber an den Auftragnehmer zu bezahlen. Die registrierten User können beispielswiese ein PayPal-Konto hinterlegen, über das dann die Bezahlung des Kaufpreises abgewickelt wird.

Vorzugsweise sind mobilen Endgeräte ortungsfähig, so dass das Kaufangebot von dem Fremdaufnahmedienst an diejenigen ortungsfähigen mobilen Endgeräte übermittelt wird, die von dem Fremdaufnahmedienst innerhalb der vorgegebenen Entfernung zum Ort des Objekts geortet werden. Alternativ kann das Kaufangebot von dem Fremdaufnahmedienst auch an die mindestens eine Funkzelle, die sich innerhalb der vorgegebenen Entfernung zum Ort des Objekts befindet, gesendet und von dort an diejenigen mobilen Endgeräte übermittelt werden, die sich innerhalb der mindestens einen Funkzelle befinden.

Besonders bevorzugt sind die zum Durchführen des Verfahrens erforderlichen Programme, also z.B. das Kaufangebot-Programmmodul, das Annahme-Programmmodul, das Foto/Video-Programmmodul und das Bezahl-Programmmodul, als App auf die registrierten User-Endgeräte heruntergeladen.

Die Erfindung betrifft weiterhin auch ein mobiles User-Endgerät mit einer Kamera sowie mit einem Annahme-Programmmodul zum Senden einer Annahme eines empfangenen Kaufangebots und mit einem Foto/Video-Programmmodul zum Senden eines mit der Kamera aufgenommenen Fotos/Videos des Objekts.

Die Erfindung betrifft schließlich auch ein Computerprogrammprodukt, insbesondere eine App zum Herunterladen auf ein User-Endgerät, welches Codemittel aufweist, die zum Durchführen der Übermittlungsschritte des erfindungsgemäßen Verfahrens angepasst sind, wenn das Programm auf einem User-Endgerät abläuft.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: das erfindungsgemäße System zur Fremdaufnahme von Fotos/ Videos; und
- Fign. 2a, 2b: schematisch den Aufbau der in Fig. 1 gezeigten Auftraggeber-Endgeräte (Fig. 2a) und mobilen Auftragnehmer-Endgeräte (Fig. 2b).

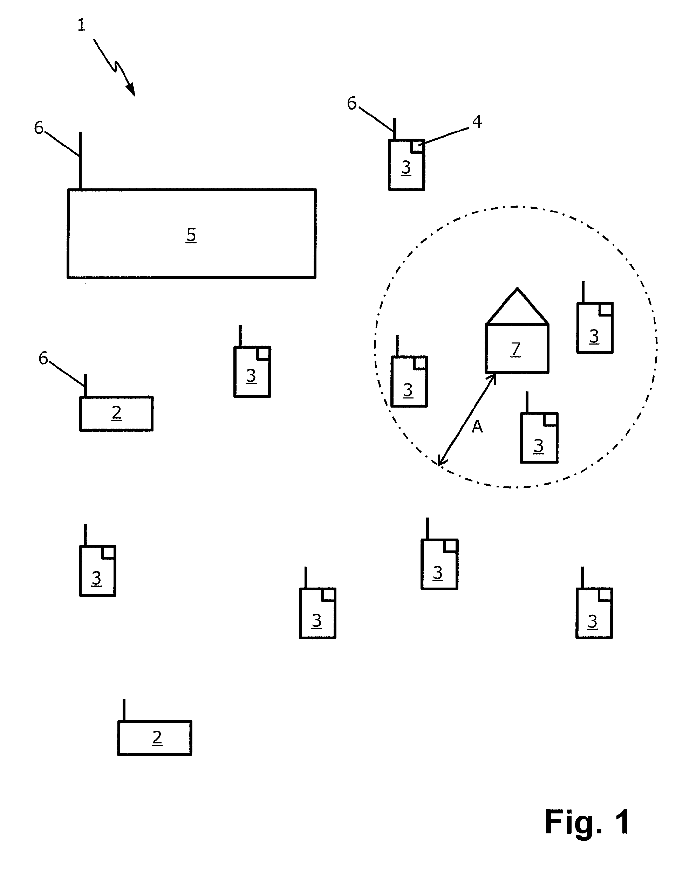

Das in **Fig. 1** gezeigte System **1** dient zur Fremdaufnahme von Fotos/Videos und umfasst mehrere User-Endgeräte **2**, **3**, von denen zumindest die Endgeräte 3 ortungsfähige mobile Endgeräte mit einer Kamera **4** sind, und einen hier beispielhaft als Server dargestellten Foto/Video-Fremdaufnahmedienst (Service) **5**, bei dem die Endgeräte 2, 3 samt ihren Userdaten registriert sind. Wie durch Antennen **6** angedeutet, sind die Endgeräte 2, 3 und der Server 5 durch ein nicht gezeigtes Netzwerk, z.B. Telefonnetz oder Internet, miteinander verbunden, wobei zumindest die mobilen Endgeräte 3 drahtlos an das Netzwerk angebunden sind. Dazu weisen die Endgeräte 2, 3 jeweils ein Empfangsteil und ein Senderteil auf, die hier nicht gezeigt sind. Bei den Endgeräten 2 kann es sich um mobile oder stationäre Endgeräte, wie z.B. Computer zuhause oder im Büro, und bei den mobilen Endgeräten 3 beispielsweise um Smartphones, Tabletcomputer, Fahrzeugkameras etc. handeln.

Im Folgenden wird das Verfahren zum Fremdaufnehmen von Fotos/Videos beschrieben.
Wenn ein User (=Auftraggeber) ein Foto oder Video von einem Objekt (z.B. Motiv, Gebäude, Gegenstand, Personen etc.) **7** an einem anderen Ort aufgenommen haben möchte, übermittelt er über sein registriertes Auftraggeber-Endgerät 2 ein entsprechendes Kaufangebot ("Foto/Video des Objekts 7 gegen einen Kaufpreis") für die Aufnahme eines Fotos/Videos von dem Objekt 7 *via* den Fremdaufnahmedienst 5 nur an diejenigen registrierten mobilen Endgeräte 3, die sich gerade innerhalb einer vorgegebenen Entfernung **A**, z.B. in einem Radius von 100m, zum Ort des Objekts 7 befinden. Das Kaufangebot wird also automatisch an alle registrierten mobilen Endgeräte 3 übermittelt, die sich in diesem Moment innerhalb der vorgegebenen Entfernung A zum Ort des Motivs bzw. Objekts 7, unter idealen Umständen (oder bei technischer Vorrausetzung) weltweit, befinden. Wenn einer der vor Ort befindlichen User (=Auftragnehmer) das Angebot annimmt, so übermittelt er über sein registriertes mobiles Auftragnehmer-Endgerät 3 die Angebotsannahme an das Auftraggeber-Endgerät 2, und zwar entweder via den Fremdaufnahmedienst 5 oder direkt von Endgerät zu Endgerät über das Telefonnetz oder Internet. Statt das Angebot anzunehmen, kann ein potentieller Auftragnehmer auch einen Gegenvorschlag bezüglich des Kaufpreises unterbreiten. In diesem Fall übermittelt der Auftragnehmer die Angebotsannahme erst dann, wenn sich beide Seiten auf den Kaufpreis geeinigt haben.
Der Auftragnehmer nimmt mit der Kamera 4 seines mobilen Auftragnehmer-Endgeräts 3 ein Foto/Video von dem gewünschten Objekt 7 auf und übermittelt das Foto/Video über sein Auftragnehmer-Endgerät 3 an das Auftraggeber-Endgerät 2, und zwar entweder via den Fremdaufnahmedienst 5 oder direkt von Endgerät zu Endgerät über das Telefonnetz oder Internet.
Nach Übermitteln des Fotos/Videos an das Auftraggeber-Endgerät 2 wird der vereinbarte Kaufpreis vom Auftraggeber an den Auftragnehmer, insbesondere *via* den Fremdaufnahmedienst 5, gezahlt. Vorzugsweise haben alle registrierten User beispielsweise ein PayPal-Konto hinterlegt, über das dann die Bezahlung des Kaufpreises abgewickelt wird.

Bei Bedarf kann der Auftraggeber die vorgegebene Entfernung A ändern, um die Anzahl der potentiellen Auftragnehmer entsprechend zu verändern.

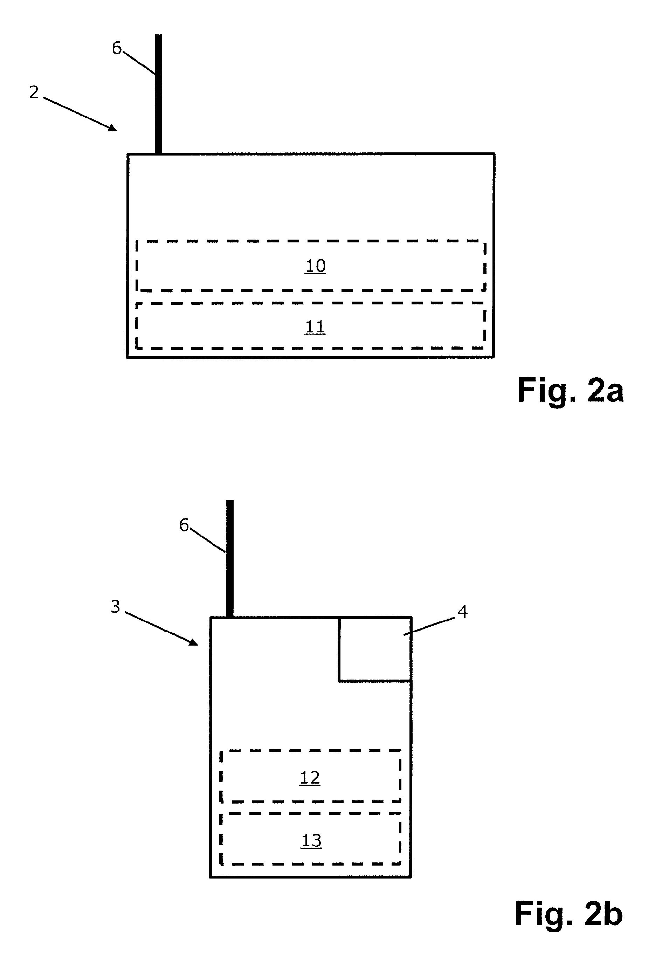

Wie in **Fig. 2a** gezeigt, weist jedes Auftraggeber-Endgerät 2 ein Kaufangebot-Programmmodul **10** zum Senden eines Kaufangebots für die Aufnahme eines Fotos/Videos von einem Objekt 7 und optional ein Bezahl-Programmmodul **11** zum Bezahlen eines vereinbarten Kaufpreises an den Auftragnehmer auf. Wie in **Fig. 2b** gezeigt, weist jedes Auftragnehmer-Endgerät 3 ein Annahme-Programmmodul **12** zum Senden einer Annahme eines empfangenen Kaufangebots und ein Foto/Video-Programmmodul **13** zum Senden eines mit der Kamera 4 aufgenommenen Fotos/Videos des Objekts 7 auf. Diese Programmmodule 10-13 sind als App (z.B. "gpd"-App (gps photo dealer)) auf die registrierten User-Endgeräte 2, 3 heruntergeladen. In der Regel weist jedes Endgerät 2, 3 alle Programmmodule 10-13 auf.

## Patentansprüche

1. System (1) zur Fremdaufnahme von FotosNideos, umfassend:
mehrere User-Endgeräte (2, 3), von denen mindestens eines ein mobiles Endgerät (3) mit einer Kamera (4) ist, und
einen Foto/Video-Fremdaufnahmedienst (5), bei dem die Endgeräte (2, 3) registriert sind,
wobei mindestens ein registriertes Auftraggeber-Endgerät ein Kaufangebot-Programmmodul (10) zum Senden eines Kaufangebots für die Aufnahme eines Fotos/Videos von einem Objekt (7) aufweist, wobei das System (1) ausgebildet ist, das Kaufangebot *via* den Fremdaufnahmedienst (5) an diejenigen registrierten mobilen Endgeräte (3) zu übermitteln, die sich gerade innerhalb einer vorgegebenen Entfernung (A) zum Ort des Objekts (7) befinden, und
wobei mindestens ein registriertes mobiles Auftragnehmer-Endgerät (3) ein Annahme-Programmmodul (12) zum Senden einer Annahme eines empfangenen Kaufangebots und ein Foto/Video-Programmmodul (13) zum Senden eines mit der Kamera (4) aufgenommenen Fotos/Videos des Objekts (6) aufweist, wobei das System (1) ausgebildet ist, die Annahme des Kaufangebots und das Foto/Video des Objekts (7) an das Auftraggeber-Endgerät (2) zu übermitteln.

2. System nach Anspruch 1, **dadurch gekennzeichnet, dass** die mobilen Endgeräte (3) ortungsfähig sind.

3. System nach Anspruch 1 oder 2, **dadurch gekennzeichnet, dass** das Auftraggeber-Endgerät (2) ein Bezahl-Programmmodul (11) zum Bezahlen eines vereinbarten Kaufpreises an den Auftragnehmer aufweist, wobei das System (1) ausgebildet ist, den vereinbarten Kaufpreis vom Auftraggeber an den Auftragnehmer zu bezahlen.

4. System nach einem der vorhergehenden Ansprüche, **dadurch gekennzeichnet, dass** das Kaufangebot-Programmmodul (10), das Annahme-Programmmodul (12), das Foto/Video-Programmmodul (13) und das Bezahl-Programmmodul (11) als App auf die Endgeräte (2, 3) geladen sind.

5. Verfahren zum Fremdaufnehmen von Fotos/Videos, mit folgenden Verfahrensschritten:
- Registrieren von User-Endgeräten (2, 3) bei einem Foto/Video-Fremdaufnahmedienst (5);
- Übermitteln eines Kaufangebots durch ein registriertes Auftraggeber-Endgerät (2) für die Aufnahme eines Fotos/Videos von einem Objekt (7) *via* den Fremdaufnahmedienst (5) an diejenigen registrierten mobilen Endgeräte (3), die sich gerade innerhalb einer vorgegebenen Entfernung (A) zum Ort des Objekts (7) befinden,
- Übermitteln der Angebotsannahme durch ein registriertes mobiles Auftragnehmer-Endgerät (3) an das Auftraggeber-Endgerät (2);
- Aufnehmen eines Fotos/Videos von dem Objekt (7) mit einer Kamera (4) des mobilen Auftragnehmer-Endgeräts (3); und
- Übermitteln des FotosNideos von dem Auftragnehmer-Endgerät (3) an das Auftraggeber-Endgerät (2).

6. Verfahren nach Anspruch 5, **dadurch gekennzeichnet, dass** das Kaufangebot von dem Service (5) an diejenigen ortungsfähigen mobilen Endgeräte (3) übermittelt wird, die von dem Fremdaufnahmedienst (5) innerhalb der vorgegebenen Entfernung zum Ort des Objekts (7) geortet werden.

7. Verfahren nach Anspruch 5, **dadurch gekennzeichnet, dass** das Kaufangebot von dem Fremdaufnahmedienst (5) an die mindestens eine Funkzelle (8), die sich innerhalb der vorgegebenen Entfernung zum Ort des Objekts (7) befindet, gesendet und von dort an diejenigen mobilen Endgeräte (3) übermittelt wird, die sich innerhalb der mindestens einen Funkzelle (8) befinden.

8. Verfahren nach einem der Ansprüche 5 bis 7, **dadurch gekennzeichnet, dass** nach Übermitteln des FotosNideos an das Auftraggeber-Endgerät (2) ein vereinbarter Kaufpreis vom Auftraggeber an den Auftragnehmer, insbesondere *via* den Fremdaufnahmedienst (5), gezahlt wird.

9. Verfahren nach einem der Ansprüche 5 bis 8, **dadurch gekennzeichnet, dass** die vorgegebene Entfernung (A) zum Ort des Objekts (7) vom Benutzer einstellbar ist.

10. Verfahren nach einem der Ansprüche 5 bis 9, **dadurch gekennzeichnet, dass** die zum Durchführen des Verfahrens erforderlichen Programme (10-13) als App auf ein registriertes User-Endgerät (2, 3) heruntergeladen werden.

11. Mobiles User-Endgerät (3) mit einer Kamera (4) sowie mit einem Annahme-Programmmodul (12) zum Senden einer Annahme eines empfangenen Kaufangebots und mit einem Foto/Video-Programmmodul (13) zum Senden eines mit der Kamera (4) aufgenommenen Fotos/Videos des Objekts (6).

12. Computerprogrammprodukt, insbesondere App zum Herunterladen auf ein User-Endgerät (2, 3), welches Codemittel (10-13) aufweist, die zum Durchführen der Übermittlungsschritte des Verfahrens nach einem der Ansprüche 5 bis 10 angepasst sind, wenn das Programm auf einem User-Endgerät (2, 3) abläuft.
